Europäisches Patentamt

European Patent Office

Office européen des brevets

(11) Veröffentlichungsnummer: **0 284 771 B1**

(12) **EUROPÄISCHE PATENTSCHRIFT**

(45) Veröffentlichungstag der Patentschrift: **28.04.93**

(51) Int. Cl.⁵: **G01R 31/28**, G01N 21/21

(21) Anmeldenummer: **88102634.8**

(22) Anmeldetag: **23.02.88**

(54) **Vorrichtung und Verfahren zur optischen Messung und/oder Abbildung elektrischer Potentiale.**

(30) Priorität: **31.03.87 DE 3710662**

(43) Veröffentlichungstag der Anmeldung:
**05.10.88 Patentblatt 88/40**

(45) Bekanntmachung des Hinweises auf die
Patenterteilung:
**28.04.93 Patentblatt 93/17**

(84) Benannte Vertragsstaaten:
**DE FR GB IT NL**

(56) Entgegenhaltungen:
**DE-A- 2 903 838**
**US-A- 4 618 819**

**Electrophysics vol. 21, 1985, Seiten 46-49;
K.E. Meyer et al. "Two dimensional E-field
mapping with subpicosecond resolution"**

**IEEE journal of quantum electronics vol. OE-
22, no. 1, Januar 1986, Seiten 69-78; J.A.
Valdmanis et al. "Subpicosecond electrooptic samplin: principles and applications"**

(73) Patentinhaber: **SIEMENS AKTIENGESELL-
SCHAFT**
**Wittelsbacherplatz 2**
**W-8000 München 2(DE)**

(72) Erfinder: **Sölkner, Gerald, Dipl.-Ing.**
**Naupliaallee 12**
**W-8012 Ottobrunn(DE)**

EP 0 284 771 B1

**Beschreibung**

Die Erfindung betrifft eine Vorrichtung und ein Verfahren zur optischen Messung und/oder Abbildung elektrischer Potentiale nach den Oberbegriffen der Patentansprüche 1 und 8.

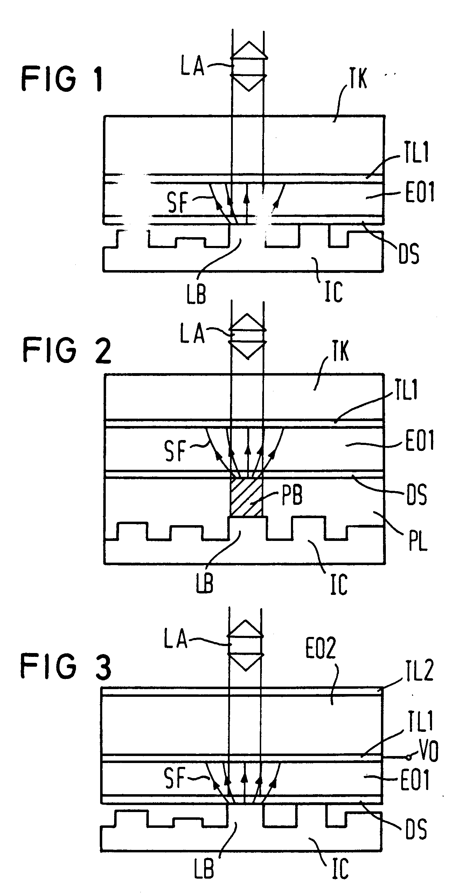

Aus der Veröffentlichung von K. E. Meyer "Two dimensional E-field mapping with subpicosecond resolution" Springer Series in Electrophysics Vol. 21 (1985) Seite 46-49 ist eine Vorrichtung zur Messung zeitabhängiger elektrischer Signale in mikroelektronischen Bauelementen bekannt. Die Vorrichtung besteht aus einem einseitig dielektrisch verspiegelten elektrooptischen Kristall (siehe insbesondere FIG 3) den man auf die Bausteinoberfläche auflegt und mit einem Laserstrahl punktweise abtastet.

Stroboskopische Abtastverfahren zur optischen Messung elektrischer Signale in integrierten Ga-As-Schaltungen sind aus den Veröffentlichungen von J. L. Freeman "Electro-optic sampling of planar digital Ga-As integrated circuits" Appl. Phys. Lett. 47 (10) 1985, Seite 1083-1084 und K. J. Weingarten "Direct electro-optic sampling of Ga-As integrated circuits" Electr. Lett. Vol. 21 No. 17, Seite 765-766 bekannt.

Weitere den elektrooptischen Effekt ausnutzende optische Meßverfahren werden in der Veröffentlichung von J.A. Valdmanis "Subpicosecond electro-optic sampling: Principles and Applications "IEEE Journ. of Quantum Electronics Vol. 22 No. 1 (1986) Seite 69-78 beschrieben.

Da man bei den bekannten Verfahren und Vorrichtungen jeweils nur die sich im Bereich der Leiterbahnen entsprechend den Leiterbahnpotentialen und den topologischen Gegebenheiten aufbauenden lokalen elektrischen Mikrofelder abtastet, können die an verschiedenen Punkten innerhalb der Schaltung vorliegenden Potentiale bzw. Spannungspegel nicht oder nur unter großem Aufwand aus den gewonnenen Meßdaten abgeleitet werden. Eine genaue Kenntnis der Spannungspegel und deren schnelle Messung ist aber eine wesentliche Voraussetzung für die Überprüfung der Funktionsweise mikroelektronischer Bauelemente.

Der Erfindung liegt die Aufgabe zugrunde, eine Vorrichtung und ein Verfahren der eingangs genannten Art anzugeben, mit denen elektrische Potentiale unabhängig von topologischen Einflüssen optisch gemessen und/oder abgebildet werden können. Diese Aufgabe wird erfindungsgemäß durch eine Vorrichtung nach Patentanspruch 1 und ein Verfahren nach Patentanspruch 8 gelöst.

Der mit der Erfindung erzielbare Vorteil besteht insbesondere darin, daß Potentiale und Spannungspegel an beliebigen Stellen innerhalb elektronischer Bauelemente unabhängig von den in der Umgebung der jeweiligen Meßpunkte vorhandenen Schaltungsstrukturen bestimmt werden können.

Während die Ansprüche 2 bis 7 bevorzugte Ausgestaltungen der Vorrichtung nach Anspruch 1 betreffen, sind die Ansprüche 9 bis 16 auf vorteilhafte Weiterbildungen des Verfahrens nach Anspruch 8 gerichtet.

Die Erfindung wird nachfolgend anhand der Zeichnungen erläutert.

Hierbei zeigen die FIG 1 bis 3 Ausführungsbeispiele erfindungsgemäßer Vorrichtungen zur optischen Messung und/oder Abbildung elektrischer Potentiale.

Die in FIG 1 schematisch dargestellte erfindungsgemäße Vorrichtung zur Messung elektrischer Potentiale an beliebigen Stellen im Innern des mikroelektronischen Bauelements IC besteht im wesentlichen aus einem auf der Bausteinoberfläche aufliegenden planparallelen elektrooptischen Kristall EO1, beispielsweise Lithiumtantalat $LiTaO_3$ oder Zinkselenit ZnSe und einem YAG-Kristall TK, dessen probenseitige Oberfläche mit einer für elektromagnetische Strahlung LA, insbesondere Laserstrahlung, transparenten leitfähigen Schicht TL1, beispielsweise Zinnoxid, überzogen ist. Anstelle des YAG-Kristalls kann man selbstverständlich auch eine andere Trägersubstanz, beispielsweise Glas, verwenden. Zur Unterdrückung der Einflüsse der Mikrofelder benachbarter Leiterbahnen sollte die im allgemeinen auf Erdpotential liegende leitfähige Schicht TL1 (im folgenden kurz Gegenelektrode genannt) möglichst nahe (einige $\mu$m) an das Bauelement IC herangebracht werden, ohne dessen Funktion durch eine zu hohe parasitäre Kapazität zu beeinträchtigen. Da die elektrischen Streufelder SF den elektrooptischen Kristall EO1 zumindest oberhalb der stromführenden Leiterbahn LB nahezu senkrecht durchsetzen, ist der elektrooptische Effekt (Pockels-Effekt) in der erfindungsgemäßen Vorrichtung nur vom Leiterbahnpotential bzw. von der zwischen der Leiterbahn LB und der Gegenelektrode TL1 vorhandenen Potentialdifferenz und nicht mehr von der Eindringtiefe der elektrischen Streufelder SF abhängig (Potentialkontrast). Hierdurch ist es möglich, Potentiale und Spannungspegel unabhängig von topologischen Einflüssen optisch mit Hilfe des auf der betreffenden Leiterbahn LB positionierten Laserstrahls LA zu bestimmen (siehe beispielsweise die eingangs zitierten Veröffentlichungen).

Zur Reflexion des die elektrischen Streufelder SF detektierenden Laserstrahls LA wird die probenseitige Fläche des elektrooptischen Kristalls EO1 dielektrisch verspiegelt. Da diese Beschichtung die Positionierung der Lasersonde LA auf der Meßstelle erschwert (verminderter Kontrast) ist eine selektiv reflektierende Ein- oder Mehrschichtverspiegelung DS von Vorteil, die die zur Potentialmessung verwendete Strahlung vollständig, die zur Meßstellensuche oder großflächigen Abbildung der Bauelementoberfläche verwendete Strahlung aber nur teilweise reflektiert. Die zur Abbildung der Bauelementoberfläche verwendete Strahlung kann man beispielsweise aus der zur Messung verwendeten Strahlung durch Frequenzverdopplung in einem nichtlinearen Medium gewinnen.

Um die die Abbildungsgüte beeinträchtigenden Interferenzeffekte an den Grenzflächen dielektrischer Spiegel-Luft bzw. Luft-Bauelement zu reduzieren kann es von Vorteil sein, den dielektrischen Spiegel DS durch eine Antireflexionsschicht zu ersetzen.

Wie die Abbildung 1 zeigt, sind die Leiterbahnen LB (beispielsweise aus fertigungstechnischen Gründen) in verschiedenen Ebenen angeordnet. Es wird deshalb im allgemeinen nicht gelingen, alle interessierenden Meßpunkte gleichzeitig mit dem elektrooptischen Kristall EO1 in Kontakt zu bringen. Um solche Höhenunterschiede auszugleichen, kann man eine photoleitende Schicht PL zwischen der Bauelementoberfläche und dem teildurchlässig dielektrisch verspiegelten bzw. mit einer Antireflexionsschicht versehenen elektrooptischen Kristall EO1 aufbringen. Auch in der in FIG 2 dargestellten Vorrichtung ist der elektrooptische Effekt nur von dem zu messenden Leiterbahnpotential abhängig, da der im Photoleiter PL durch die nichtreflektierte Strahlungsintensität erzeugte leitende Bereich LB die nicht- bzw. teilreflektierende Schicht DS und die jeweilige Leiterbahn LB kurzschließt.

Um geometrieabhängige Effekte und Einflüsse von Mikrofeldern benachbarter Leiterbahnen bei der Potentialmessung weiter zu reduzieren ist es vorteilhaft, die transparente Gegenelektrode TL1 nicht auf Erdpotential, sondern auf ein negatives (bei positivem Leiterbahnpotential) oder positives (bei negativem Leiterbahnpotential) von beispielsweise $V_0$ = ± 100 Volt zu legen. Zur Kompensation der durch die geladene Gegenelektrode TL1 im elektrooptischen Kristall EO1 induzierte Doppelbrechung wird erfindungsgemäß vorgeschlagen, einen zweiten elektrooptischen Kristall EO2 mit einer für den abtastenden Laserstrahl LA transparenten leitfähigen Schicht TL2 unmittelbar auf der Gegenelektrode TL1 anzuordnen (siehe FIG 3). Diese Schicht TL2 liegt vorteilhafterweise auf dem Potential des dielektrischen Spiegels DS, also üblicherweise auf Erdpotential, so daß innerhalb der elektrooptischen Kristalle EO1 bzw. EO2 der gleiche Spannungsabfall auftritt. Da die Phasendifferenz $\Delta \phi$ zwischen ordentlichem und außerordentlichem Strahl in Pockels-Kristallen dem Produkt E • d (E und d bezeichnen die elektrische Feldstärke im Kristall bzw. die vom Laserstrahl im elektrischen Feld zurückgelegte Wegstrecke), im vorliegenden Fall also der Potentialdifferenz $V_0$ proportional ist, gilt für die erfindungsgemäße Vorrichtung nach FIG 3

$$\Delta \phi_1 = -\Delta \phi_2 ,$$

so daß nur die elektrischen Leiterbahnfelder den Polarisationszustand des Laserstrahls LA verändern ($\Delta \phi_1$ und $\Delta \phi_2$ bezeichnen die durch die geladene Gegenelektrode TL1 in den elektrooptischen Kristallen EO1 bzw. EO2 erzeugten Phasenverschiebungen). Auch in dieser Vorrichtung kann wieder ein Photoleiter zwischen der Bauelementoberfläche und dem teildurchlässig dielektrisch verspiegelten bzw. mit einer Antireflexionsschicht versehenen elektrooptischen Kristall EO1 aufgebracht werden.

Für die Untersuchung eines elektronischen Bauelementes mit einer aktiven Oberfläche von etwa 1 × 1 cm$^2$ kann eine erfindungsgemäße Vorrichtung mit folgenden Schichtdicken d verwendet werden:

| Elektrooptischer Kristall | EO1 | $d_{EO1} \gtrsim 50 \ \mu m$ |
| Dielektrischer Spiegel | DS | $d_{DS} \approx 100 \ nm$ |
| Transparente Gegenelektrode | TL1 | $d_{TL1} \approx 100 \ nm$ |
| Trägerkristall | TK | $d_{TK} \approx 0.5 \ mm$ |
| Elektrooptischer Kristall n | EO2 | $d_{EO2} \approx 0.5 \ mm$ |
| Transparente leitfähige Schicht | TL2 | $D_{TL2} \approx 100 \ nm$ |

Die jeweils zu wählende Schichtdicke ist den experimentellen Gegebenheiten anzupassen.

## Patentansprüche

**1.** Vorrichtung zur optischen Messung und/oder Abbildung elektrischer Potentiale mit einem unmittelbar oberhalb einer Probe (IC) angeordneten elektrooptischen Kristall (EO1),
**gekennzeichnet durch**
eine unmittelbar auf dem elektrooptischen Kristall (EO1) angeordnete und zumindest für die zur Messung verwendete elektromagnetische Strahlung (LA) transparente leitfähige Schicht (TL1).

2. Vorrichtung nach Anspruch 1, dadurch **gekennzeichnet,** daß die probenseitige Fläche des elektrooptischen Kristalls (EO1) dielektrisch verspiegelt ist.

3. Vorrichtung nach Anspruch 1, dadurch **gekennzeichnet,** daß die probenseitige Fläche des elektrooptischen Kristalls (EO1) mit einer selektiv reflektierenden dielektrischen Schicht (DS) versehen ist.

4. Vorrichtung nach Anspruch 1, dadurch **gekennzeichnet,** daß die probenseitige Fläche des elektrooptischen Kristalls (EO1) mit einer Antireflexionsschicht (DS) versehen ist.

5. Vorrichtung nach einem der Ansprüche 1 bis 4, dadurch **gekennzeichnet,** daß die leitfähige Schicht (TL1) auf einer Trägersubstanz (TK) angeordnet ist.

6. Vorrichtung nach einem der Ansprüche 1 bis 4, **gekennzeichnet** durch einen unmittelbar auf der leitfähigen Schicht (TL1) angeordneten zweiten elektrooptischen Kristall (EO2) mit einer zumindest für die zur Messung verwendete elektromagnetische Strahlung (LA) transparenten zweiten leitfähigen Schicht (TL2), wobei die beiden leitfähigen Schichten (TL1,TL2) unterschiedliche Potentiale aufweisen.

7. Vorrichtung nach einem der Ansprüche 1 bis 6, **gekennzeichnet durch** eine zwischen der Probe (IC) und dem elektrooptischen Kristall (EO1) vorhandene photoleitende Schicht (PL).

8. Verfahren zur optischen Messung und/oder Abbildung elektrischer Potentiale, wobei
   - ein elektrooptischer Kristall (EO1) unmittelbar oberhalb einer Probe (IC) angeordnet wird,
   - ein Lichtstrahl polarisiert und auf mindestens einem Punkt der Probenoberfläche positioniert wird und
   - die durch ein elektrisches Potential der Probe hervorgerufene Änderung der Polarisation des Lichtstrahls (LA) detektiert wird, **dadurch gekennzeichnet,** daß eine für einen Lichtstrahl (LA) transparente leitfähige Schicht (TL1) unmittelbar auf dem elektrooptischen Kristall (EO1) angeordnet ist.

9. Verfahren nach Anspruch 8, dadurch **gekennzeich**net, daß ein auf der probenseitigen Fläche dielektrisch verspiegelter elektrooptischer Kristall (EO1) verwendet wird.

10. Verfahren nach Anspruch 8, dadurch **gekennzeichnet,** daß ein auf der probenseitigen Fläche mit einer selektiv reflektierenden Schicht (DS) überzogener elektrooptischer Kristall (EO1) verwendet wird.

11. Verfahren nach Anspruch 8, dadurch **gekennzeichnet,** daß ein auf der probenseitigen Fläche mit einer Antireflexionsschicht (DS) überzogener elektrooptischer Kristall (EO1) verwendet wird.

12. Verfahren nach einem der Ansprüche 8 bis 11, dadurch **gekennzeichnet,** daß die leitfähige Schicht (TL1) auf einer Trägersubstanz (TK) aufgebracht ist.

13. Verfahren nach einem der Ansprüche 8 bis 11, dadurch **gekennzeichnet,** daß ein zweiter elektrooptischer Kristall (EO2) mit einer für den Lichtstrahl (LA) transparenten zweiten leitfähigen Schicht (TL2) unmittelbar auf der leitfähigen Schicht (TL1) angeordnet wird und daß die beiden leitfähigen Schichten (TL1, TL2) auf unterschiedliche Potentiale gelegt werden.

14. Verfahren nach einem der Ansprüche 8 bis 13, dadurch **gekennzeichnet,** daß die Probenoberfläche mit einer photoleitenden Schicht (PL) bedeckt wird.

15. Verfahren nach Anspruch 11, dadurch **gekennzeichnet,** daß zur Abbildung und zur Messung Licht unterschiedlicher Wellenlänge verwendet wird.

16. Verfahren nach Anspruch 15, dadurch **gekennzeichnet,** daß das zur Abbildung verwendete Licht aus dem zur Messung verwendeten Licht durch Frequenzverdopplung gewonnen wird.

**Claims**

1. Device for optical measurement and/or imaging of electrical potentials, having an electrooptical crystal (EO1) arranged directly above a specimen (IC), characterised by a conductive layer (TL1), which is arranged directly on the electrooptical crystal (EO1) and is transparent at least to the electromagnetic radiation (LA) used for measurement.

2. Device according to Claim 1, characterised in that the specimen-side surface of the electrooptical crystal (EO1) is dielectrically mirrored.

3. Device according to Claim 1, characterised in that the specimen-side surface of the electrooptical crystal (EO1) is provided with a selectively reflecting dielectric layer (DS).

4. Device according to Claim 1, characterised in that the specimen-side surface of the electrooptical crystal (EO1) is provided with an anti-reflection coating (DS).

5. Device according to one of Claims 1 to 4, characterised in that the conductive layer (TL1) is arranged on a carrier substance (TK).

6. Device according to one of Claims 1 to 4, characterised by a second electrooptical crystal (EO2), which is arranged directly on the conductive layer (TL1) and has a second conductive layer (TL2) which is transparent at least to the electromagnetic radiation (LA) used for measurement, the two conductive layers (TL1, TL2) having different potentials.

7. Device according to one of Claims 1 to 6, characterised by a photoconductive layer (PL) present between the specimen (IC) and the electrooptical crystal (EO1).

8. Method for optical measurement and/or imaging of electrical potentials, it being the case that
   - an electrooptical crystal (EO1) is arranged directly above a specimen (IC),
   - a light beam is polarised and positioned on at least one point of the specimen surface, and
   - the modification of the polarisation of the light beam (LA) caused by an electrical potential of the specimen is detected,
   characterised in that a conductive layer (TL1) which is transparent to a light beam (LA) is arranged directly on the electrooptical crystal (EO1).

9. Method according to Claim 8, characterised in that use is made of an electrooptical crystal (EO1) which is dielectrically mirrored on the specimen-side surface.

10. Method according to Claim 8, characterised in that use is made of an electrooptical crystal (EO1) coated on the specimen-side surface with a selectively reflecting layer (DS).

11. Method according to Claim 8, characterised in that use is made of an electrooptical crystal (EO1) coated with an anti-reflection coating (DS) on the specimen-side surface.

12. Method according to one of Claims 8 to 11, characterised in that the conductive layer (TL1) is applied to a carrier substance (TK).

13. Method according to one of Claims 8 to 11, characterised in that a second electrooptical crystal (EO2) having a second conductive layer (TL2) which is transparent to the light beam (LA) is arranged directly on the conductive layer (TL1), and in that the two conductive layers (TL1, TL2) are connected to different potentials.

14. Method according to one of Claims 8 to 13, characterised in that the specimen surface is covered by a photoconductive layer (PL).

15. Method according to Claim 11, characterised in that light of different wavelengths is used for imaging and measurement.

**16.** Method according to Claim 15, characterised in that the light used for imaging is obtained from the light used for measurement by frequency doubling.

**Revendications**

**1.** Dispositif de mesure optique et/ou de visualisation de potentiels électriques comportant un cristal électro-optique (EO1) disposé directement au-dessus d'un échantillon (IC),
caractérisé par une couche conductrice (TL1) disposée directement sur le cristal électro-optique (EO1) et transparente au moins pour le rayon électromagnétique (LA), qui est utilisé pour la mesure.

**2.** Dispositif selon la revendication 1, caractérisé en ce que la face côté échantillon du cristal électro-optique (EO1) est métallisée diélectriquement.

**3.** Dispositif selon la revendication 1, caractérisé en ce que la face côté échantillon du cristal électro-optique (EO1) est pourvue d'une couche diélectrique (DS) réfléchissant d'une manière sélective.

**4.** Dispositif selon la revendication 1, caractérisé en ce que la face côté échantillon du cristal électro-optique (EO1) est pourvue d'une couche (DS) antiréfléchissante.

**5.** Dispositif selon l'une des revendications 1 à 4, caractérisé en ce que la couche conductrice (TL1) est appliquée à une substance de support (TK).

**6.** Dispositif selon l'une des revendications 1 à 4, caractérisé par un deuxième cristal électro-optique (EO2) appliqué directement sur la couche conductrice (TL1) et comportant une deuxième couche conductrice (TL2) transparente au moins pour le rayon électromagnétique (LA) qui est utilisé pour la mesure, les deux couches conductrices (TL1,TL2) présentant des potentiels différents.

**7.** Dispositif selon l'une des revendications 1 à 6, caractérisé par une couche photoconductrice (PL) présente entre l'échantillon (IC) et le cristal électro-optique (EO1).

**8.** Procédé de mesure optique et/ou de visualisation de potentiels électriques, dans lequel
   - un cristal électro-optique (EO1) est disposé directement au-dessus d'un échantillon (IC),
   - un rayon lumineux est polarisé et est appliqué en au moins un point de la surface de l'échantillon et
   - la modification de la polarisation du rayon lumineux (LA) est détectée par un potentiel électrique de l'échantillon,
caractérisé en ce que
une couche conductrice (TL1), transparente pour un rayon lumineux (LA) est disposée directement sur le cristal électro-optique (EO1).

**9.** Procédé selon la revendication 8, caractérisé en ce que l'on utilise un cristal électro-optique (EO1) métallisé diélectriquement sur la surface côté échantillon.

**10.** Procédé selon la revendication 8, caractérisé en ce que l'on utilise un cristal électro-optique (EO1) revêtu sur la face côté échantillon d'une couche (DS) réfléchissant de manière sélective.

**11.** Procédé selon la revendication 8, caractérisé en ce que l'on utilise un cristal électro-optique (EO1) revêtu sur la face côté échantillon d'une couche (DS) antiréfléchissante.

**12.** Procédé selon l'une des revendications 8 à 11, caractérisé en ce que l'on applique une couche conductrice (TL1) sur une substance de support (TK).

**13.** Procédé selon l'une des revendications 8 à 11, caractérisé en ce qu'un deuxième cristal électro-optique (EO2), comportant une seconde couche conductrice (TL2) transparente pour le rayon lumineux (LA), est appliqué directement à la couche conductrice (TL1), et en ce que les deux couches conductrices (TL1,TL2) sont placées à des potentiels différents.

6

**14.** Procédé selon l'une des revendications 8 à 13, caractérisé en ce que l'on recouvre la surface de l'échantillon avec une couche photoconductrice (PL).

**15.** Procédé selon la revendication 11, caractérisé en ce que l'on utilise pour la visualisation et pour la mesure, de la lumière à longueurs d'onde différentes.

**16.** Procédé selon la revendication 15, caractérisé en ce que la lumière utilisée pour la visualisation est obtenue à partir de la lumière utilisée pour la mesure, par doublement de la fréquence.

FIG 1

FIG 2

FIG 3